# EUROPEAN PATENT SPECIFICATION

(11) **EP 1 615 182 B1**
(45) Date of publication and mention of the grant of the patent: **16.11.2011**
(21) Application number: 05014872.5
(22) Date of filing: 08.07.2005
(51) Int. Cl.: G07F 17/32, G07F 7/00

(54) **Gaming machine and gaming system**
Spielgerät und Spielsystem
Machine à sous et système de jeu

(30) Priority: 08.07.2004 JP 2004201610
(43) Date of publication of application: 11.01.2006
(73) Proprietor: Universal Entertainment Corporation, Tokyo (JP)
(72) Inventor: Okada, Kazuo, Tokyo (JP)
(74) Representative: HOFFMANN EITLE

(56) References cited:
- EP-A- 0 724 900
- EP-A- 1 139 310
- EP-A- 1 231 577
- EP-A- 1 434 179

## Description

The present invention relates to a gaming machine such as a slot machine, a roulette machine, a bingo game machine, or a card game machine, and more particularly to a gaming machine for allowing a player to play a game using a bill or a card-like information recording card and a gaming system having a plurality of such gaming machines installed.

Generally, with the gaming machine as described above, a player uses money (bills and coins) or a medium other than money, such as a medal, which will be collectively called "game medium" in the specification. Usually, a award gained by the player playing a game is paid out as money or game media (the paid-out game media may also be converted into money). In this case, the player may move to a gaming machine different from the gaming machine from which the award is paid out for playing another game, in which case it is necessary to perform adjustment processing and money or game medium payout processing at the gaming machine where the player played the game. Thus, for the player, it is cumbersome to pay out money or game media whenever each game is over at the gaming machine where the player plays the game.

In order to solve such a problem, for example, JP-A-2003-299875 discloses a gaming machine having a card unit for writing and reading deposit and payout information using a card-like information recording medium, such as a magnetic card or an IC card. That is, according to the configuration, the deposit and payout information can be managed with the card and thus the necessity for incorporating a payout unit for paying out money or game media, etc., in the gaming machine is eliminated and the advantage such that the configuration of the gaming machine can be simplified can be provided. For example, JP-B-6-014990 discloses a gaming machine provided with a payout mechanism for allowing the player to select payout of game media or payout using an information recording medium. That is, the configuration allows the player to receive payout of a predetermined amount of game media during playing a game.

Considering the convenience of the player playing a game, and service for the customer (the player), there can be improvements to be made in the gaming machine as described above and for the manager of a game arcade installing a plurality of such gaming machines.

For example, since money cannot be used with the gaming machine having the card unit described above, the player needs to purchase a card in which credit information is recorded. There is a possibility that a non-regular customer (player) may be disoriented before starting to play a game in searching for a place to purchase the card. That is, from the viewpoint of the manager of a game arcade, it is considered that service is improved by allowing all attendees to easily game a play.

In the method of writing credit information as the award obtained as a result of playing a game into an information recording medium for paying out to the player, when the credit information reaches zero, usually the player discards the information recording medium and the information recording medium cannot be reused. Further, the manager of a game arcade may desire to give a specific card (membership card) to a player coming to the game arcade to identify the player to enclose the customer for distinguishing the player from a non-regular customer (player) or give a special profit to the player possessing such as membership card for improving the service. In this case, it is desirable that information recording media different in use, namely, the above-mentioned information recording medium into which credit information is simply written and the above-mentioned membership card should be able to be properly handled in one gaming machine.

It is therefore one of objects of the invention to provide a gaming machine for improving the convenience of players and also improving service for players and a gaming system using such gaming machines.

European Patent Application EP1434179 describes a gaming system that comprises a plurality of gaming machines, each of which utilizes a storage medium capable of being inserted to the gaming machines. Types and minimum bets of the gaming machines differ between at least two of the gaming machines. The storage mediums are commonly used with the gaming machines. For this reason, a player can play games over the gaming machines on a consecutive basis without exchanging of game medium (chips, coins or the like).

According to a first aspect of the present invention, there is provided a gaming machine for providing a game to a player, the gaming machine comprising a bill/card handling means, according to appended independent claim 1.

According to a second aspect of the present invention, there is provided a gaming system according to appended independent claim 11.

Preferred embodiments are defined in the appended dependent claims.

For a better understanding of the invention and to show how the same may be carried into effect, reference will now be made, by way of example, to the accompanying drawings, in which:
FIG. 1 is a perspective view to show a gaming machine according to an embodiment of the invention;
FIG. 2 is a perspective view to show a structure example of a bill/card handling unit according to the embodiment;
FIG. 3 is an enlarged perspective view of the portion of a bill insertion slot and a card insertion slot;
FIG. 4 is a schematic drawing to show the internal structure of the bill/card handling unit;
FIG. 5A is a perspective view to show a state in which a card-like information recording medium is inserted into the card insertion slot, and FIG. 5B is a perspective view to show a state in which a card-like information recording medium is inserted into the bill insertion slot;
FIG. 6 is a drawing to show a state in which a bill is inserted into a bill validation unit;
FIG. 7 is a block diagram to show a configuration example of controller for controlling drive sections of the bill/card handling unit;
FIG. 8 is a flowchart to show a card processing procedure example of the controller in the bill/card handling unit;
FIG. 9 is a flowchart to show a handling procedure example of a specific card (membership card) in the controller;
FIG. 10 is a flowchart to show a handling procedure example of a temporary storage card (non-membership card) in the controller;
FIG. 11 is a flowchart to show an issuing procedure example of a temporary storage card (non-membership card) in the controller; and
FIG. 12 is a block diagram to show a schematic configuration example of a gaming system according to the invention.

There is provided a gaming system including: a specific card issuing apparatus that issues a specific card in which unique information for identifying an owner of the specific card and credit information are recorded; a plurality of gaming machines each providing a game to the player and having a bill/card handling unit to which the specific card, a temporary storage card in which no information for identifying an owner of the temporary storage card is recorded, and a bill is to be inserted, the bill/card handling unit being capable of issuing the temporary storage card being recorded with the credit information; an adjusting apparatus that performs separate adjustment processing for the credit information recorded on the specific card and for the credit information on the temporary storage card; and a management server that transmits and receive data to and from the specific card issuing apparatus, the gaming machines, and the adjusting apparatus, and includes management database for managing the credit information and the unique information recorded on the specific card issued by the specific card issuing apparatus, credit information occurring in each of the gaming machines, and adjustment information provided by the adjusting apparatus.

There is provided a gaming system including: a specific card issuing apparatus that issues a specific card in which unique information for identifying an owner of the specific card and credit information are recorded; a plurality of gaming machines each providing a game to the player and having a bill/card handling unit to which the specific card, a temporary storage card in which no information for identifying an owner of the temporary storage card is recorded, and a bill is to be inserted, the bill/card handling unit being capable of issuing the temporary storage card being recorded with the credit information; an adjusting apparatus that performs separate adjustment processing for the credit information recorded on the specific card and for the credit information on the temporary storage card; and a management server that transmits and receive data to and from the specific card issuing apparatus, the gaming machines, and the adjusting apparatus, and includes management database for managing the credit information and the unique information recorded on the specific card issued by the specific card issuing apparatus, credit information occurring in each of the gaming machines, and adjustment information provided by the adjusting apparatus.

An embodiment of a gaming machine according to the invention and a gaming system using such gaming machines will be discussed specifically with reference to the accompanying drawings. In the description of the embodiment, a slant top slot machine is illustrated as the gaming machine.

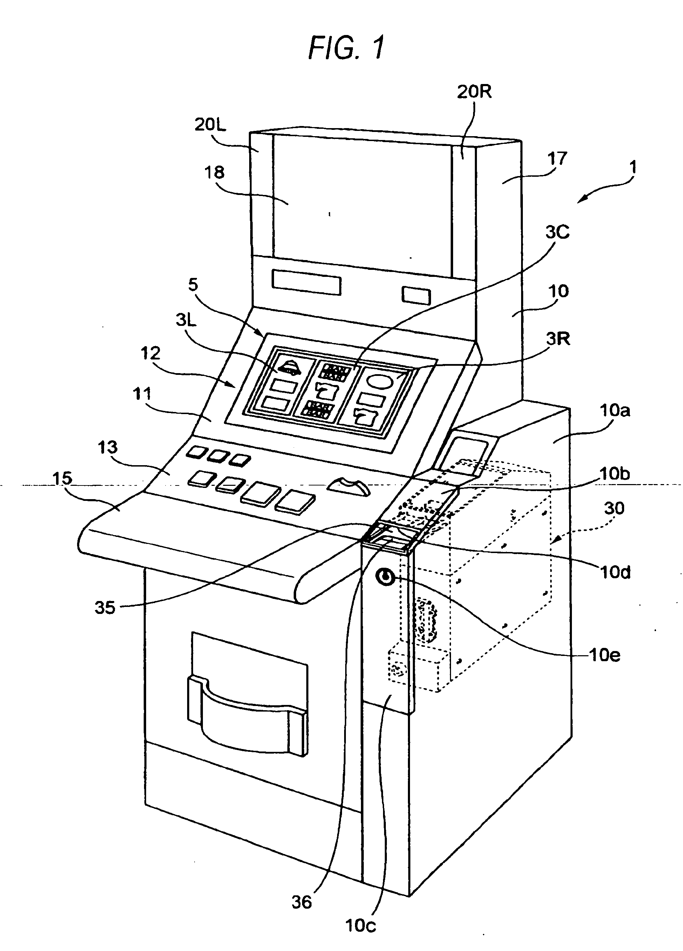

As shown in FIG. 1, a slot machine 1 according to the embodiment is provided with a cabinet 10 including a gaming area 5 where three reels 3L, 3C, and 3R with symbols drawn thereon are disposed in a horizontal row for rotation.

The cabinet 10 includes a door 11 that can be opened and closed relative to the cabinet 10, the door 11 slanting with the rear rising relative to the horizontal direction for allowing the player to easily visually recognize the reels 3L, 3C, and 3R in a state in which the player sits (the front of the door forms the gaming area where the reels can be visually recognized), and the reels 3L, 3C, and 3R are placed roughly in the center area from side to side of the door 11. The cabinet 10 also includes a pedestal portion 13 having an inclined face more gentle than the door below the door 11, and the pedestal portion 13 is provided with various operation members required for the player to play a game (various buttons such as BET button, reel rotation button, reel stop button, and adjustment button, and an insertion slot for inputting a coin).

An arm rest 15 having a roughly horizontal plane is provided to the front of the pedestal portion 13, allowing the player to easily operate the various operation members provided on the pedestal portion 13 with his or her arms put on the arm rest 15 in a state in which the player sits on a chair (not shown).

The cabinet 10 also includes a front panel section 17 placed upright at the rear of the door 11. The front panel section 17 is provided with an award table 18 for displaying a winning symbol combination, an award table, etc., speakers 20L and 20R for producing an effect sound to increase the gaming interest during playing a game, and the like.

The cabinet 10 may further be provided with various units to increase the gaming interest; for example, a liquid crystal display 12 (transmitting liquid crystal display) through which the reels 3L, 3C, and 3R can be visually recognized may be placed on the door 11 for displaying various dynamic effect images in response to the gaming and displaying information required for the player to advance the game advantageously. In this case, the transmitting liquid crystal display includes protective glass, a display plate, a liquid crystal panel, a light guide plate, a reflection film, a fluorescent lamp, a table carrier package (TCP) in which a liquid crystal panel drive IC is installed, and the like.

The cabinet 10 contains game controller for controlling game advance with the reels, numerical data information concerning the bet made by the player, credit information (deposit information) concerning the game award gained by the player (payout amount) and also controlling various image displays and notification sounds produced with the liquid crystal display 12, the speakers 20L, 20R, etc. The controller is implemented as a control board (gaming machine control board) on which a CPU, ROM, RAM, and the like are mounted.

An external unit 10a having a bill/card handling unit (bill/card handling means) 30 for handling money input by the player (in this case, paper bills) and different types of information recording media of a card-type (in this case, two different types of IC cards) described later is installed on one side of the cabinet 10. The external unit 10a is formed roughly like a rectangular parallelepiped which has a roughly half height of the height of the cabinet 10 and is thin in the width direction as shown in FIG. 1.
The bill/card handling unit 30 installed in the cabinet 10 is electrically connected to the gaming machine control board installed in the cabinet 10.
In the embodiment, the external unit 10a is provided to be detachable from the cabinet 10, and the bill/card handling unit 30 is held in a state in which it is built in at a predetermined position by a retention structure provided in the unit 10a.

An open door 10b and an open door 10c are supported on the top and the front of the external unit 10a for rotation; the open doors 10b and 10c are opened both toward the top and the front respectively, allowing the operator to take out the bill/card handling unit 30. The open door 10b on the top of the external unit 10a is formed with an opening 10d for opening a bill insertion slot 35 and a card insertion slot 36 formed in a main body section 31 of the bill/card handling unit 30 (described later) . The open door 10c at the front of the external unit 10a is formed with a keyhole 10e for a lock mechanism for locking both open doors into an open state.
In the embodiment, as described above, the bill/card handling unit 30 is received in the external unit 10a and the external unit 10a is provided to be detachable from the cabinet 10.
However, the external unit 10a may be provided integrally with the cabinet 10. Alternately, the gaming machine 1 may be configured without the external unit 10a by accommodating the bill/card handling unit 30 within the cabinet 10. In this case, the bill/card handling unit 30 may be provided integrally with the cabinet 10, or may be provided to be detachable from the cabinet 10.

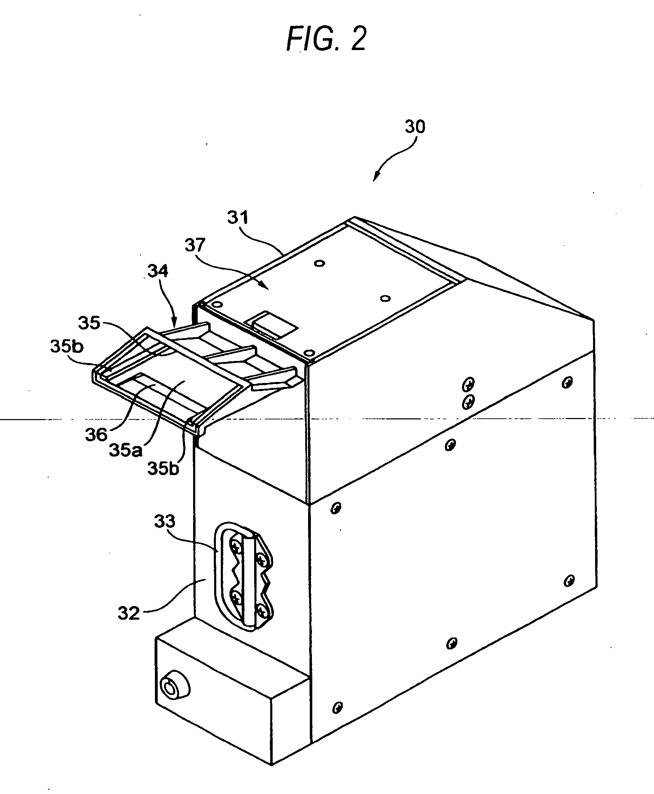

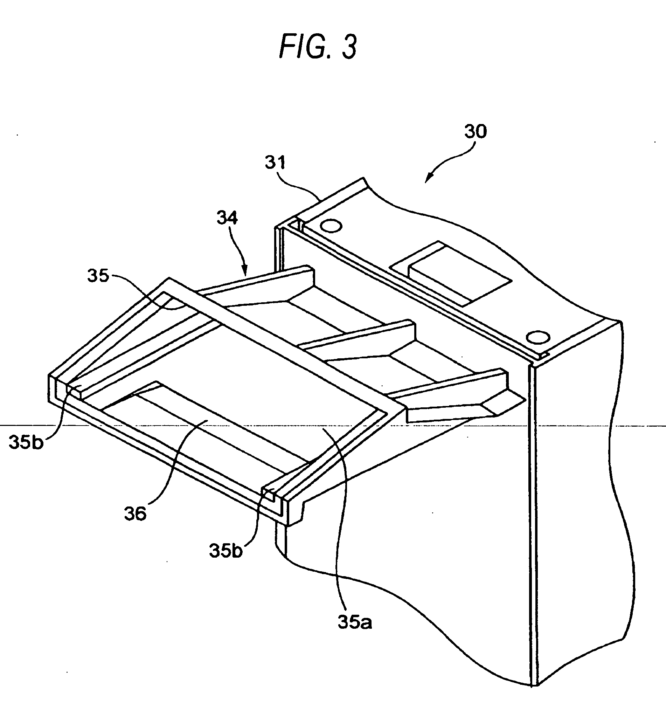

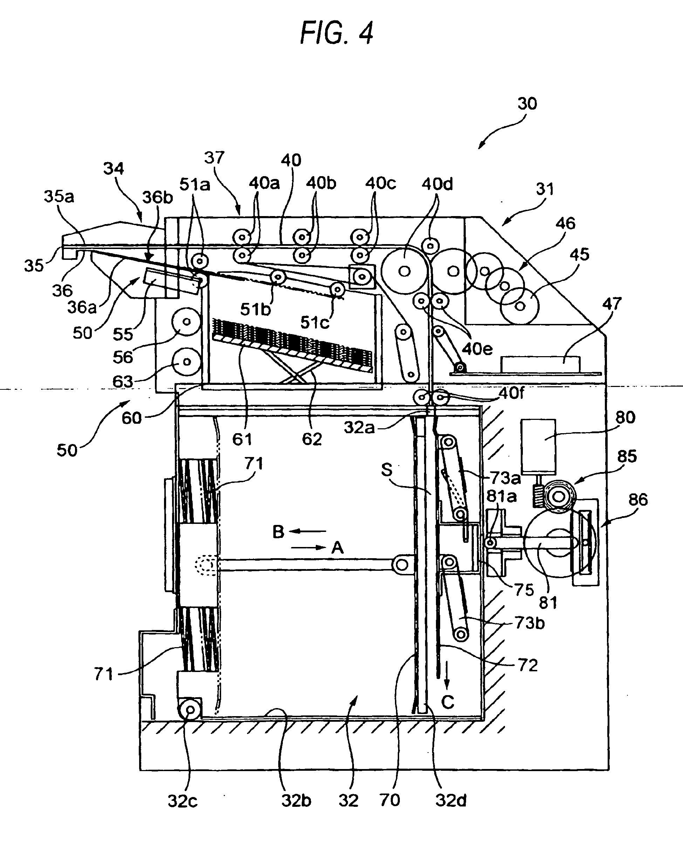

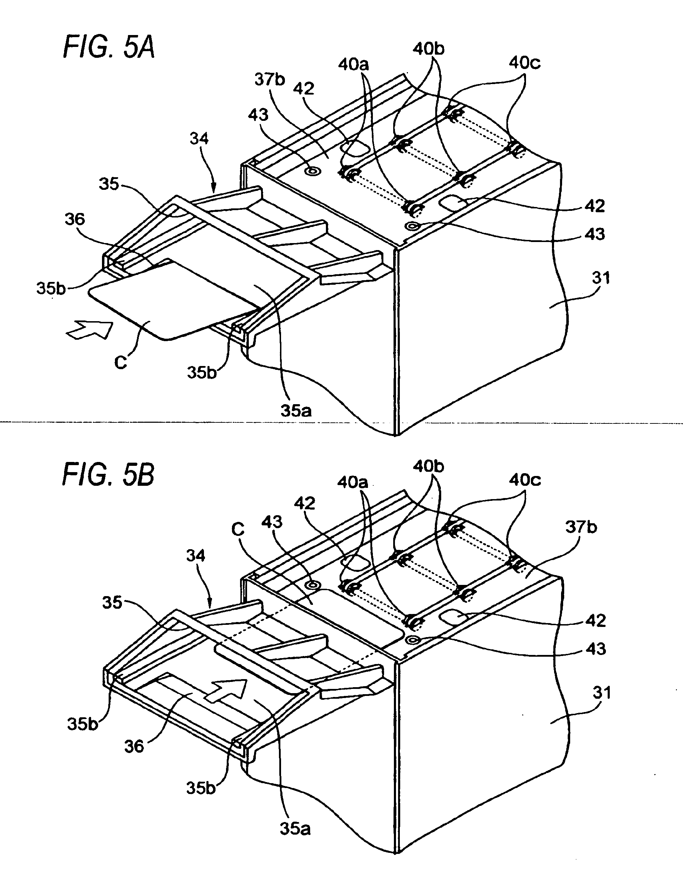

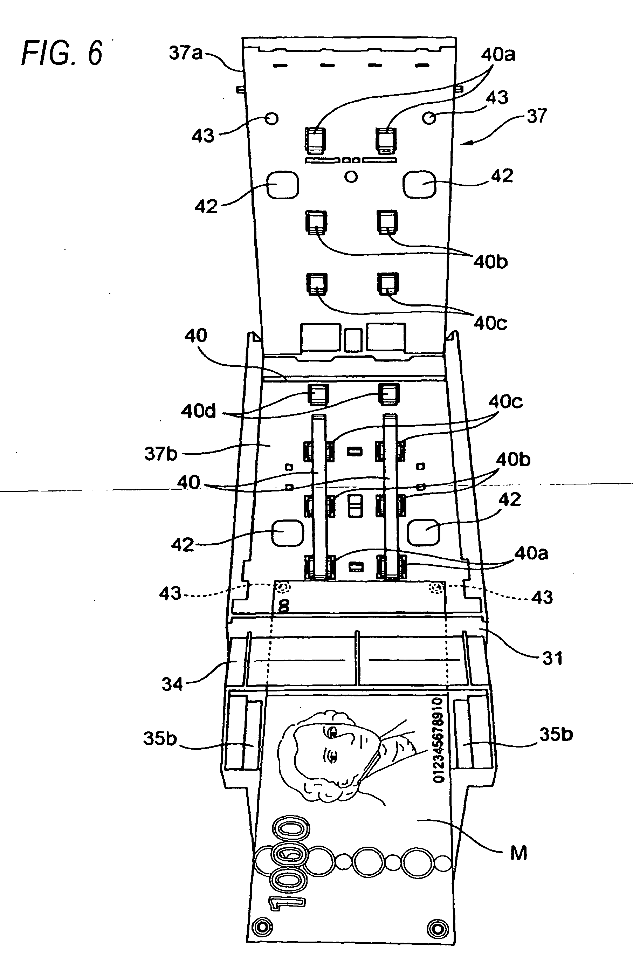

Next, the structure of the bill/card handling unit 30 built in the slot machine will be discussed with reference to FIGS. 2 to 6. FIG. 2 is a perspective view to show a structure example of the bill/card handling unit 30. FIG. 3 is an enlarged perspective view of the portion of the bill insertion slot and the card insertion slot. FIG. 4 is a schematic drawing to show the internal structure of the bill/card handling unit 30. FIG. 5A is a perspective view to show a state in which an information recording card, which will be referred to as "a card-like information recording medium", or simply "card," is inserted into the card insertion slot. FIG. 5B is a perspective view to show a state in which a card is inserted into the bill insertion slot. FIG. 6 is a drawing to show a state in which a bill is inserted into a bill validation unit 37.

The bill/card handling unit 30 includes the main body section 31 and a bill storage unit (cashbox) 32 for storing bills, attached to the main body section 31 so that the bill storage unit (bill storage means) 32 can be drawn out toward the operator by the operator gripping a knob 33. The main body section 31 is formed with a medium acceptance section 34 projecting like a beak, which is formed with the bill insertion slot 35 for accepting a bill and the card insertion slot 36 for accepting a card roughly at the same position as the bill insertion slot 35.

Specifically, the bill insertion slot 35 is formed so as to be open in the direction orthogonal to a flat guide plane 35a on which the player puts a bill for guiding the insertion direction roughly horizontally, and the card insertion slot 36 is formed so as to be open to the guide plane 35a. That is, a bill is inserted into the bill insertion slot 35 in the horizontal direction, and a card is inserted into the card insertion slot 36 in the slanting downward direction on the card route. In this case, the guide plane 35a of the bill insertion slot 35 is formed on both sides with regulation walls 35b corresponding to the width of a used bill, and the card insertion slot 36 is formed narrower than the bill insertion slot 35 for inhibiting a bill from being inserted into the card insertion slot 36.

A bill validation unit (bill validation means) 37 for determining the validity of a bill inserted through the bill insertion slot 35 is placed on the top of the main body section 31, and a transport passage (transport belt) 40 and transport roller pairs 40a, 40b, 40c, and 40d continuously installed in the transport passage 40, making up a bill transport mechanism are disposed in the bill validation unit 37. The transport roller pairs 40a, 40b, 40c, and 40d are supported on an openable member 37a that can be opened and closed and a flat frame 37b on the main body section side making up the bill validation unit 37 for rotation, as shown in FIG. 6. The transport passage 40 is wound around the transport roller pairs supported on the frame 37b on the main body section side for rotation. In this case, the transport passage 40 is formed continuously with the guide plane 35a and is bent downward roughly at the right angle at the rear of the transport roller pair 40d for guiding a bill toward the bill storage unit 32. Transport roller pairs 40e and 40f for transporting a bill are also disposed in the transport passage 40 extending downward.

The bill validation unit 37 is provided with a bill validation sensor 42 that determines the validity of an inserted bill and a bill insertion sensor 43 that detects an insertion of a bill without detecting card insertion. Focusing attention on the fact that the width of an inserted bill is larger than that of a card, the bill insertion sensor 43 may be configured with optical sensors (light emission and reception elements placed facing the openable member 37a and the frame 37b on the main body section side opposed to the openable member 37a) placed with a wider spacing than the card width in the width direction for detecting both end parts of an inserted bill, for example.

Specifically, as shown in FIG. 6, when a bill M is inserted along the regulation walls 35b on the guide plane 35a, the sensors 43 at both ends detect the bill at the same time (a detection signal is generated at the same time from the sensors 43 installed at both ends), thereby recognizing passage of the bill; whereas as shown in FIG. 5B, when a card C is inserted along the guide plane 35a by mistake, the width of the card C is smaller than the width of the bill M and therefore the sensors 43 at both ends do not generate a detection signal at the same time and passage of a bill is not recognized.

The transport roller pairs 90a to 40f can be rotated forward and backward through a known drive force transmission mechanism including a bill transport motor 45 and a gear train 46 coupled with the bill transport motor 45. In this case, driving the bill transport motor 45 is controlled by a control circuit board 47 installed in the main body section 31. The bill validation sensor 42 and the bill insertion sensor 43 are connected to the control circuit board 47 for detecting signals from the sensors, detecting insertion of a bill, determining the validity of the bill, and performing drive control of drive start, backward drive, etc., of the bill transport motor 45. That is, when the bill insertion sensors 43 at both ends generate a detection signal at the same time, the bill transport motor 45 (transport roller pairs 40a, 40b, 40c, and 40d) is driven for transporting the bill and when the validity of the bill is determined by the bill validation sensor 42, is driven so as to deliver the inserted bill to the storage unit; if the bill cannot be determined to be valid, the bill transport motor 45 is driven backward for rejecting the bill through the bill insertion slot 35.

When the player inserts a card C into the bill insertion slot 35 by mistake, the bill insertion sensors 43 do not generate a detection signal at the same time and thus the bill transport motor 45 is not driven and the card is inhibited from entering the bill/card handling unit 30.

Disposed in the main body section 31 is a card processing unit 50 that can write various pieces of information onto the card inserted through the card insertion slot 36 and/or can read the recorded information from the card.

The card processing unit 50 includes a card transport mechanism including a card transport passage 36a continuous with the card insertion slot 36 below the bill transport passage 40 and a pinch roller 51a and transport rollers 51b and 51c disposed continuously along the card transport passage 36a. In this case, the card insertion slot 36 and the card transport passage 36a are formed so as to guide a card in the slanting downward direction so as not to interfere with the bill transport passage 40. A card detection sensor 36b for detecting insertion of a card is installed in the card transport passage 36a.

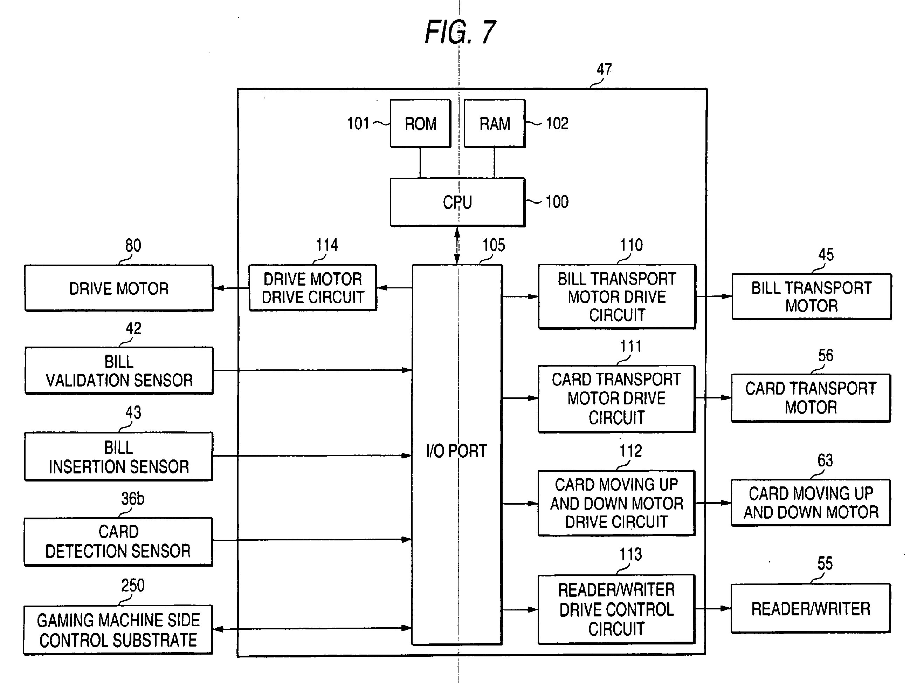

The card processing unit 50 includes a reader/writer (reading/writing means) 55 which is installed in the card transport passage 36a and can read and write information from and onto the card guided into the transport passage. In this case, the reader/writer 55 includes a non-contacting type head (such as an antenna) so as to be able to read and write (update) information from and onto an inserted card (IC card) in a non-contacting manner, and the processing operation is controlled by a drive control circuit 113 (see FIG. 7). The reader/writer 55 can read and write information in response to the type of used card (optical card, magnetic card, magneto-optical card, contact IC card, etc.,) in addition to the non-contact IC card mentioned above.

The pinch roller 51a and the transport rollers 51b and 51c can be rotated forward and backward through a known drive force transmission mechanism including a card transport motor 56 and a gear train coupled with the card transport motor 56. In this case, driving the card transport motor 56 is controlled based on a detection signal from the card detection sensor 36b in the control circuit board 47.

The card processing unit 50 also includes a card storage unit (card storage means) 60 for storing cards. The card storage unit 60 serves as a collection box for collecting canceled cards (non-membership cards with credit information set to zero). Further, in the configuration of the embodiment, the card storage unit 60 has an issued card storage function of storing and issuing a credit (payout) information record card (non-membership card) in the card reader/writer 55 to the player. Here, the card storage unit 60 is used to use a collected card as an issued card as described above.

Specifically, a placement plate 61 for stacking a plurality of cards and a link mechanism 62 for moving the placement plate 61 upward is placed in the card storage unit 60. The placement plate 61 is moved upward by the link mechanism 62 and the transport rollers 51b and 51c are driven with the top card pressed against the transport rollers 51b and 51c, whereby the card stored in the card storage unit 60 is ejected (issued) through the card insertion slot 36. At this time, credit information is entered in the card in the reader/writer 55 and the card is issued (ej ected) to the player. At any time other than the card ejection time, the link mechanism 62 is driven so that the placement plate 61 is placed at the bottom position, and a canceled card is ejected through the pinch roller 51a to the card storage unit 60 as it is.

The link mechanism 62 is driven by a card moving up and down motor 63 through a drive force transmission mechanism (not shown), and driving the card moving up and down motor 63 is controlled by the control circuit board 47.

In the configuration, a collected card storage unit and an issued card storage unit may be provided separately; however, the card storage unit is provided as described above, so that it is made possible to simplify and miniaturize the configuration and the structure of the bill/card handling unit 30. The card storage unit 60 may only serve as a collection box for collecting canceled cards (non-membership cards with credit information set to zero).

The bill storage unit 32 for storing bills is formed on the top with a bill acceptance hole 32a at the position corresponding to the transport passage 40 disposed in the main body section 31 when it is installed in the main body section 31. The bills determined to be valid by the bill validation unit 37 are stacked in order on the bill storage unit 32 through the bill acceptance hole 32a. The bill storage unit 32 is formed on the bottom face with an openable lid 32b for taking out the bills stored in the bill storage unit 32, and the openable lid 32b is opened with a hinge part 32c as the center.

A stock mechanism for stacking bills delivered in order for storage is disposed in the bill storage unit 32, and a bill pressing drive mechanism for driving the stock mechanism is disposed in the main body section 31.

The stock mechanism includes a support plate 70 for supporting bills, a compression spring 71 for urging the support plate 70 in the arrow A direction, a push plate 72 for pushing a bill delivered through the bill acceptance hole 32a into the support plate 70, and a pair of arm members 73a and 73b with both ends journaled so as to enable the push plate 72 to move in the arrow B direction and the arrow C direction. The arm members 73a and 73b are joined to the push plate 72 and are also jointed to a reception plate 75 abutted against a reciprocation rod in a bill pressing mechanism described just below and serves as a parallel crank mechanism.

The bill pressing mechanism includes a drive motor 80 and a reciprocation rod 81 reciprocated in the arrow A direction and the arrow B direction. A power transmission mechanism 85 implemented as a gear train and a cam mechanism 86 being joined to the reciprocation rod 81 for converting gear rotation motion into reciprocating motion are disposed between the drive motor 80 and the reciprocation rod 81.

Driving the drive motor 80 is controlled by the control circuit board 47. Whenever a bill is delivered through the bill acceptance hole 32a from the transport passage 40, the drive motor 80 is driven. That is, when a bill is delivered into space S between the support plate 70 and the push plate 72, the drive motor 80 is driven, driving the reciprocation rod 81 in the arrow B direction through the power transmission mechanism 85 and the cam mechanism 86. A roller 81a is supported at the tip of the reciprocation rod 81 and abuts the reception plate 75 through a hole made in the bill storage unit 32, causing the reception plate 75 to slide in the arrow B direction. Accordingly, the push plate 72 is driven in the arrow B direction through the arm members 73a and 73b integrally with the reception plate 75 and is driven in the arrow C direction, pressing the bill against the support plate 70 against the urging force of the compression spring 71. In this case, if the bill is bent, the push plate 72 is driven in the arrow C direction and thus the bill is straightened and is pressed against the support plate 70. The urging force of the compression spring 71 acting on the support plate 70 acts on the bill, but the top bill strikes against the pair of regulation walls 32d formed like a rib in both side wall portions of the bill storage unit 32, so that the stack state is maintained.

FIG. 7 is a block diagram to show one configuration example of the control circuit board (controller, control means) 47.
The control circuit board 47 includes a CPU 100 that controls units in the bill/card handling unit, such as the bill transport motor 45, the card transport motor 56, the card moving up and down motor 63, the drive motor 80, and the reader/writer 55, program ROM 101 storing an operation program of the drive sections, and control RAM 102.

Connected to the CPU 100 through an I/O port 105 are a bill transport motor drive circuit 110, a card transport motor drive circuit 111, a card moving up and down motor drive circuit 112, a reader/writer drive control circuit 113, and a drive motor drive circuit 114 for driving the drive sections. The operation of each drive section is controlled by a control signal from the CPU 100 in accordance with the operation program stored in the program ROM 101. The bill insertion sensors 43, the card detection sensor 36b, and the bill validation sensor 42 are also connected to the CPU 100 through the I/O port 105, and detection signals and a bill validation signal from the sensors are input to the CPU 100, which then controls driving the drive sections based on the input signals. Further, the gaming machine control board 250 being disposed in the slot machine main unit for executing game processing is connected to the CPU 100 through the I/O port 105. Credit information concerning an insertedbill or card is transmitted to the gaming machine control board 250 for executing a game or when a game is over, etc., as the player presses an adjustment button, credit information (adjustment information) is input from the gaming machine control board 250 and the input adjustment information is output to the reader/writer drive control circuit 113 and is written onto a card through the reader/writer 55.

The gaming machine of the embodiment (bill/card handling unit) makes it possible to use two different types of cards, specifically a specific card (membership card) recording unique information associated with the player individual (the information such as name, gender, age, or identification information capable of determining such information) in a storage area, and a card (non-membership card or a temporary storage card) temporarily issued for improving the convenience of each game without recording such information. For example, the former card corresponds to a card issued at a dedicated counter, etc., of a game arcade where gaming machines are installed or a general credit card; for example, it corresponds to a card issued for the purposes of improving service for the heavy users, etc., enclosing the customers, etc. The latter card corresponds to a card issued for improving the convenience of the users (mainly, non-regular customers) in playing a game with a gaming machine; for example, it may be issued by a dedicated card issuing apparatus for issuing a card in exchange for money input or may be issued by a slot machine as in the embodiment. Only credit information (containing payout information concerning award gained by the player playing a game) is temporarily written on the card, and information identifying the player possessing the card is not recorded on the card.

Handling procedures of both types of cards in the gaming machine will be discussed. Specific card processing is executed as the CPU 100 of the control circuit board 47 shown in FIG. 7 controls driving the drive sections in accordance with the control program stored in the program ROM 101.

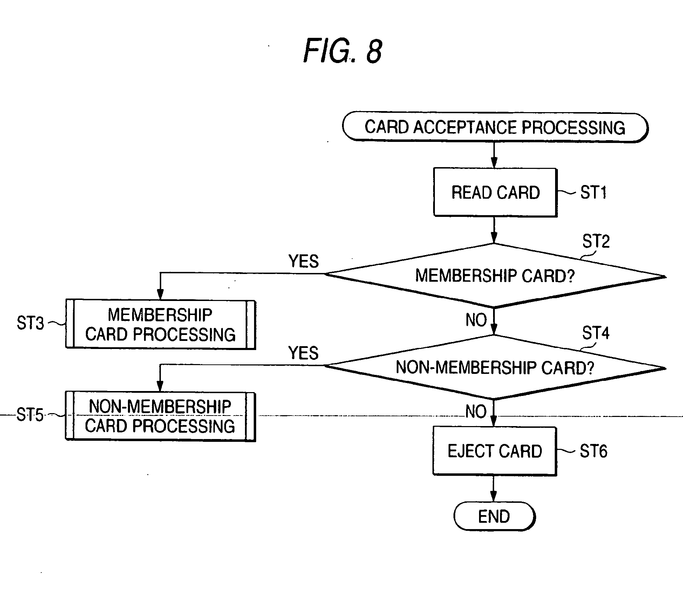

As shown in FIG. 8, in card acceptance processing, first a card inserted into the card insertion slot 36 is read through the reader/writer 55 (ST1) and whether or not the inserted card is a membership card is determined (ST2). When the inserted card is a membership card, membership card processing described later is executed (ST3); when the inserted card is not a membership card, whether or not the card is a predetermined card (non-membership card that can be accepted with the gaming machine) is determined (ST4). When the card is a non-membership card, non-membership card processing is executed (ST5); when the card is not a non-membership card, namely, when an entirely uninterested card is inserted, the transport roller pair 51a is driven for ejecting the card (ST6).

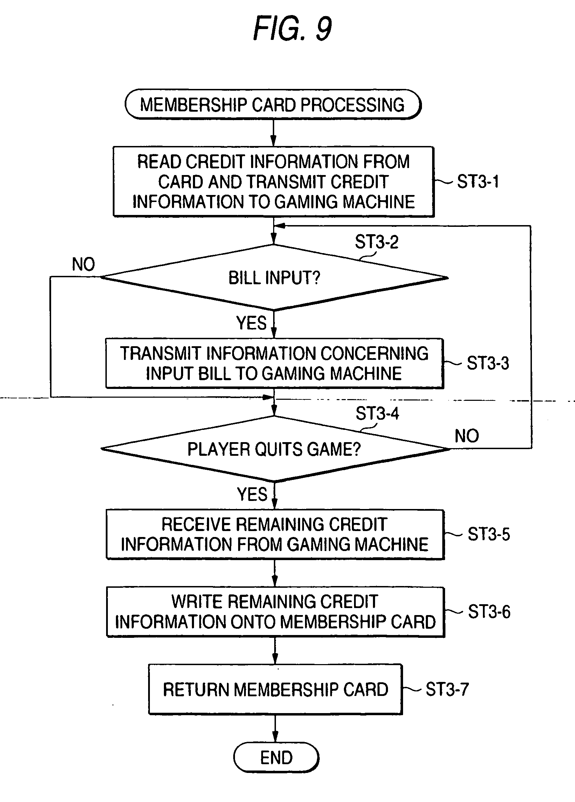

The membership card processing procedure at ST3 is executed in accordance with a procedure shown in a flowchart of FIG. 9, for example.
When the inserted card is a membership card at ST3, the credit information stored in the data storage area in the card is read and the read credit information is transmitted to the slot machine of the gaming machine (gaming machine control board 250) (ST3-1). It is made possible for the player to play a game within the range of the transmitted credit. For example, when the player has spent all credit during the game play, if the player newly inputs a bill through the bill insertion slot (ST3-2), information concerning the input amount is transmitted to the gaming machine (gaming machine control board 250) (ST3-3), allowing the player to play a game within the range of the input amount. The processing sequence is repeated until the player selects game over (ST3-4).

When the player selects to quit playing the game such by pressing the adjustment button, (ST3-4), the control circuit board 47 receives remaining credit information (containing payout information) from the gaming machine control board 250 (ST3-5) and the reader/writer 55 writes the received credit information onto the inserted membership card (ST3-6). Upon completion of the write processing, the transport roller pair 51a is driven for returning the membership card to the player (ST3-7), and the processing sequence terminates.

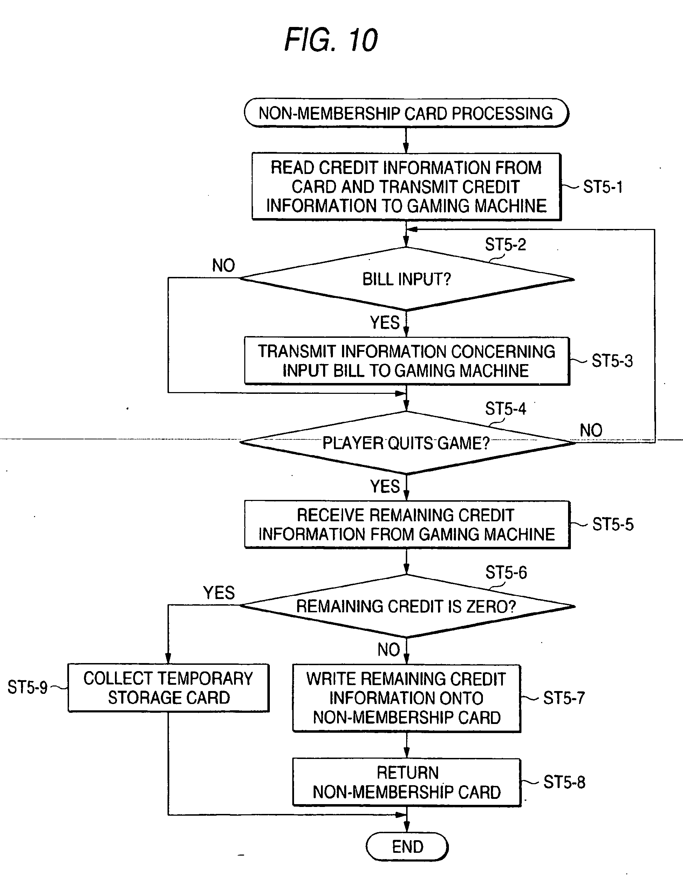

On the other hand, the non-membership card processing procedure at ST5 is executed in accordance with a procedure shown in a flowchart of FIG. 10, for example.
When the inserted card is a non-membership card at ST5, the credit information stored in the data storage area in the card is read and the read credit information is transmitted to the slot machine of the gaming machine (gaming machine control board 250) (ST5-1). It is made possible for the player to play a game within the range of the transmitted credit. For example, when the player has spent all credit during the game play, if the player newly inputs a bill through the bill insertion slot (ST5-2), information concerning the input amount is transmitted to the gaming machine (gaming machine control board 250) (ST5-3), allowing the player to play a game within the range of the input amount. The processing sequence is repeated until the player selects to quit playing the game (ST5-4).

When the player selects to quit playing the game such by pressing the adjustment button, (ST5-4), the control circuit board 47 receives remaining credit information (containing payout information) from the gaming machine control board 250 (ST5-5). When the credit information is not zero (NO at ST5-6), the reader/writer 55 writes the received credit information onto the inserted non-membership card (ST5-7). Upon completion of the write processing, the transport roller pair 51a is driven for returning the non-membership card to the player (ST5-8), and the processing sequence terminates. When the remaining credit information received from the gaming machine control board 250 is zero (YES at ST5-6), the transport roller pair 51a is driven in the retract direction for dropping the card into the card storage unit 60 (ST5-9), and the processing sequence terminates.

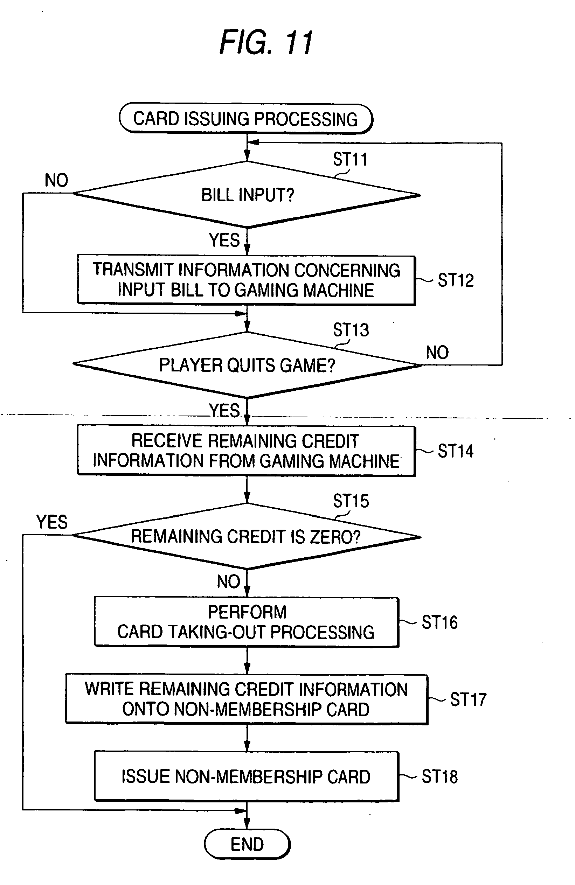

Next, an example of a procedure of issuing a card (non-membership card) in the bill/card handling unit will be discussed according to a flowchart of FIG. 11.

When a bill is input into the bill insertion slot (ST11), credit information responsive to the input amount is transmitted to the slot machine of the gaming machine (gaming machine control board 250) (ST12), allowing the player to play a game within the range of the transmitted credit.

When the player selects to quit playing the game such by pressing the adjustment button, (ST13), the control circuit board 47 receives remaining credit information (containing payout information) from the gaming machine control board 250 (ST14). When the credit information is not zero, card taking-out processing is performed (ST16). In the card taking-out processing, the card moving up and down motor 63 is driven for upward moving the placement plate 61 with cards stacked thereon through the link mechanism 62, the top card is pressed against the transport rollers 51b and 51c, and the transport rollers 51b and 51c and the transport roller pair 51a are driven for setting the top card to the information write position of the reader/writer 55. Subsequently, the reader/writer 55 writes the received credit information onto the positioned non-membership card (ST17). Upon completion of the write processing, the transport roller pair 51a is driven for issuing the non-membership card to the player (ST18), and the processing sequence terminates. When the remaining credit information received from the gaming machine control board 250 is zero, the processing sequence terminates without issuing any non-membership card.

According to the gaming machine incorporating the bill/card handling unit, the player can use both a bill and a card and the gaming machine can record credit information obtained with the gaming machine on a card and issue the card to the player, so that the convenience for playing a game can be improved. That is, the player can receive issuing processing of a card (non-membership card) on which credit information is recorded with the gaming machine, it is made possible for the player to enjoy the later game play without using money, the player need not purchase a card at a specific spot, and the convenience can be improved.

When credit information recorded on the non-membership card reaches zero, the non-membership card is collected into the bill/card handling unit 30, so that the labor for discarding the card is eliminated. In the embodiment, the collected card is reused for issuing the card as a non-membership card, so that effective use of the card is made possible and cost reduction is made possible.

Further, the bill/card handling unit 30 can accept the two types of cards different in use (membership card and non-membership card) and when a game is over, the appropriate processing as described above is executed in response to the card type, so that the convenience of all players can be improved and it is also possible to provide specific service for the customer possessing a membership card; the customers can be enclosed.

Next, one configuration example of a gaming system using the gaming machines described above will be discussed.

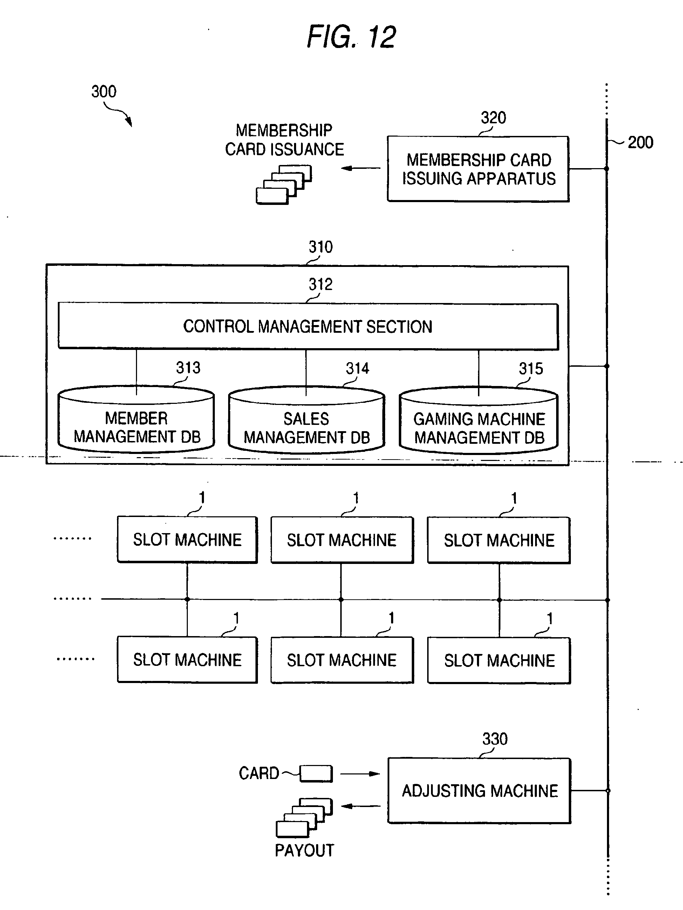

FIG. 12 is a block diagram to show a schematic configuration of the gaming system.

A gaming system 300 includes a management server 310 connected to a communication network 200, a membership card issuing apparatus (specific card issuing apparatus) 320, a plurality of the slot machines 1 (gaming machines) each incorporating the above-described bill/card handling unit, and an adjusting machine (adjusting apparatus) 330.

The communication network 200 enables the management server 310, the membership card issuing apparatus 320, a plurality of slot machines 1 each incorporating the above-described bill/card handling unit, and the adjusting machine 330 to conduct information communications with each other. When each above-mentioned machine connected to the communication network 200 establishes a session for the objective machine, the communication network 200 enables the machines to transfer information therebetween regardless of radio or wired and regardless of leased or switched lines. The communication network 200 may be implemented as a combination of networks through a gateway like the Internet and the gaming system may be a system constructed in a single game arcade or may be a system constructed across game arcades relevant to each other.

The management server 310 is an apparatus, such as an information processing apparatus of a computer, a workstation, etc., including a control management section 312 having a CPU, program ROM, RAM, a hard disk drive, an input/output unit (I/O port), etc., and various databases, such as a member management DB 313, a sales management DB 314, and a gaming machine management DB 315, where information and a program are stored and read based on a control command of the control management section 312. A program for causing the information processing apparatus to function as a management server is stored in the program ROM, the hard disk drive, etc., and as the program is loaded into the RAM and the CPU executes the program, the management server function (management of various pieces of information) is provided. The management server may be installed in a specific game arcade or may be installed anywhere other than a game arcade through the communication network 200. It may be made possible for an external terminal connected to the communication network, such as a personal computer, to manage the various pieces of management information.

The membership card issuing apparatus 320 is installed at a counter, etc., in a game arcade, for example, and the player can receive issuance of a membership card by making member registration using the membership card issuing apparatus 320. A membership card stores unique information capable of determining the card owner (for example, name, gender, address, etc., or identification information capable of determining them), and the unique information is managed in the member management DB 313 of the management server 310. To store credit information as well as the unique information, registration information and credit information are managed in the sales management DB 314 of the management server 310. In member registration, authentication information may be received from the management server 310 before a membership card is issued.

When the player plays a game in one of the slot machines 1, card information, bill information, and charge information inserted in the bill/card handling unit, card issuance information, credit information, game play information, and the like are transmitted to the management server 310. The information is managed in the sales management DB 314 and the gaming machine management DB 315 of the management server 310. For example, sales information of the whole slot machines and the like are managed in the sales management DB 314, and deposit/payout information, availability factor information, game play information, player tracking information, and the like of each slot machine is managed in the gaming machine management DB 315. From the management server 310, event information, etc., may be distributed to the slot machines and specific event information may be distributed to the slot machine with which the member plays a game.

The adjusting machine 330 is installed in a game arcade, for example, and is used to convert the credit information recorded on the membership card or the temporary storage card issued in each slot machine into money. The player can receive payout responsive to the credit amount by inserting the carried card into the adjusting machine 330. The adjustment information is managed in the sales management DB 314 of the management server 310. When the membership card is inserted, the adjustment information may be managed in the member management DB 313 for each member.

According to the described gaming system, it is made possible for the game arcade to provide the player possessing a membership card with different service from that for a general player and enclose customers. Since the unique information for determining each member, the credit information, and the adjustment information are managed in the management databases of the management server 310, for example, it is made possible to efficiently conduct customer management and sales management, and further, for example, it is made possible to keep track of customer action patterns, the operation state of each slot machine for use for business strategy.

The machines being connected to the communication network 200 that constitutes the gaming system are shown by way of example, and can be modified in various forms in response to the type of gaming machine installed in a game arcade, the scale of a game arcade. The information managed in the management server can also be modified whenever necessary.
The bill/card handling unit described above can be installed in an external apparatus such as a vending machine in addition to the gaming machine as described above.
As described with reference to the embodiment, according to the gaming machine, the player can use a bill and can also use different types of card-like information recording media different in use and when the player quits to play the game, appropriate card processing is executed, so that the convenience of the player for playing a game can be improved. The credit information is information concerning the previously paid amount for playing a game for the player to play a game with the gaming machine and information concerning payout obtained as the award of the game play. The player can play a game within the range of the credit information, and payout processing (conversion-to-money processing) can be executed within the range of the credit information.
According to the gaming machine, the player possessing a specific card can use the card for playing the game within the range of the credit information and the credit information recorded on the card can be updated. The player possessing a temporary storage card can use the card for playing a game within the range of the credit information and the credit information recorded on the card can be updated. When the credit information recorded on the temporary storage card reaches zero (credit information for allowing the player to play the game reaches zero), the temporary storage card is taken into the gaming machine, so that the player need not discard the card, and the card becomes easy to use whereby a convenience can be improved.
According to the gaming machine, when the player not possessing a card gains a award from the gaming machine by playing the game using a bill, specifically when credit information for allowing the player to play another game exists when the player quits to play the game, the credit information is recorded on a card and the card is issued to the player, so that the convenience for playing a game.can be improved. That is, the player can receive issuing processing of a temporary storage card on which credit information is recorded with the gaming machine, it is made possible for the player to enjoy the later game play without using cash, the player need not previously purchase a card at a specific spot, and the convenience can be improved. The collected card can be reused for issuing the card as a temporary storage card, so that effective use of the card is made possible and cost reduction is made possible.
According to the gaming system, the player can use a bill and can also use a specific card and a temporary storage card different in use, so that the convenience of the player for playing a game can be improved. It is made possible to provide the player possessing a specific card with different service from that for a general player and enclose customers. Since the unique information, the credit information, and the adjustment information are managed in the management database of the management server, for example, it is made possible to efficiently conduct customer management, sales management, etc., and further, for example, it is made possible to keep track of customer action patterns, the operation state of each gaming machine, etc., for use for business strategy, etc.
According to the gaming machine as described above, the convenience of the player can be improved and the service for the player can be improved. According to the gaming system described above, the convenience of the player can be improved, the service for the player can be improved, and further it is made possible to efficiently conduct customer management, sales management.
The foregoing description of the embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable those skilled in the art to utilize the invention in various embodiments and with various modifications as are suited to the particular use contemplated. It is intended that the scope of the invention be defined by the claims appended hereto, and their equivalents.

## Claims

1. A gaming machine (1) for providing a game to a player, the gaming machine comprising a bill/card handling means (30) comprising:
a bill insertion slot (35) arranged to allow a bill to be inserted;
a card insertion slot (36) arranged to allow a plurality of types of information recording cards to be inserted;
a bill validation means (37) arranged to determine a validity of a bill inserted into the bill insertion slot;
a bill storage means (32) arranged to store the bill that is determined to be valid by the bill validation means;
a reading/writing means (55) arranged to read and write credit information from and to a information recording card that is inserted into the card insertion slot;
a card storage means (60) arranged to store the information recording cards;
a control means (47) arranged to control the bill validation means and the reading/writing means, and to perform card processing responsive to the type of information recording card inserted into the card insertion slot when the player quits to play the game; and
a card transport means (36a) arranged to transport the information recording cards (c) with respect to the reading/writing means (55), and which is arranged to be controlled by the control means (47), wherein
the plurality of types of the information recording cards (c) include:
a specific card (c) in which unique information for identifying an owner of the specific card is recorded; and
a temporary storage card in which no information for identifying an owner of the temporary storage card is recorded, and
the bill/card handling means is arranged to be capable of issuing a temporary storage card being recorded with the credit information, and **characterised by** that,
the control means is arranged to control the card transport means to transport the temporary storage card to the card storage means (60) for storing the temporary storage card therein when the credit information on the temporary storage card (c) is zero.

2. The gaming machine (1) according to claim 1, further comprising a cabinet (10).

3. The gaming machine (1) according to claim 1 further comprising:
a cabinet (10); and
an external unit (10a) that is attached to the cabinet and is arranged to accommodate the bill/card handling means (30).

4. The gaming machine (1) according to claim 3, wherein the external unit (10a) is arranged to be detachable from the cabinet (10).

5. The gaming machine (1) according to claim 1, wherein the control means (47) is arranged to control the reading/writing means (55) to update the credit information on the specific card in returning the specific card to the player in a case where the specific card (c) is input into the card insertion slot (36) when the player quits to play the game.

6. The gaming machine (1) according to claim 1 wherein the control means (47) is further arranged to control the reading/writing means (55) to update the credit information on the temporary storage card in returning the temporary storage card to the player, in a case where the temporary storage card (c) is input into the card insertion slot (36) when the player quits to play the game.

7. The gaming machine (1) according to claim 1, wherein the control means (47) is further arranged to control the card transport mechanism to take out one of the temporary storage card stored in the storage means (60) such that the temporary storage card is issued to the player, and to control the reading/writing means (55) to write the credit information onto the temporary storage card, in a case where an information recording card is not inserted into the card insertion slot (36) and the credit information is not zero when the player quits to play the game.

8. The gaming machine (1) according to claim 1, further comprising a main body section (31) formed with a medium acceptance section (34) that is formed with a bill insertion slot (35) and a card insertion slot (36) at substantially the same position.

9. The gaming machine (1) according to claim 1, wherein the card insertion slot (36) is narrower than the bill insertion slot (35).

10. The gaming machine (1) according to claim 1, wherein the bill validation means (37) is provided with a bill insertion sensor (43) adapted to detect insertion of the bill at a position where the bill is transported, the position being outside an area where the card is transported.

11. A gaming system (300) comprising:
a specific card issuing apparatus (320) arranged to issue a specific card (c) in which unique information for identifying an owner of the specific card and credit information are recorded;
a plurality of gaming machines (1) according to claim 1;
an adjusting apparatus (330) arranged to perform separate adjustment processing for the credit information recorded on the specific card and for the credit information on the temporary storage card; and
a management server (310) arranged to transmit and receive data to and from the specific card issuing apparatus, the gaming machines and the adjusting apparatus, and includes management databases (313-315) arranged to manage the credit information and the unique information recorded on the specific card issued by the specific card issuing apparatus, credit information occurring in each of the gaming machines, and adjustment information provided by the adjusting apparatus.

## Patentansprüche

1. Spielgerät (1) zum Bereitstellen eines Spiels für einen Spieler, wobei das Spielgerät Geldschein-/Karten-Bearbeitungsmittel (30) umfasst, umfassend:
einen Geldschein-Einschubsschacht (35), der dazu eingerichtet ist, es zu erlauben, einen Geldschein einzuschieben;
einen Karten-Einschubsschacht (36), der dazu eingerichtet ist, es zu erlauben, eine Vielzahl von Typen von Informationaufzeichungs-Karten einzuschieben;
ein Geldschein-Validierungsmittel (37), das dazu eingerichtet ist, eine Validität eines Geldscheins zu bestimmen, der in den Geldschein-Einschubsschacht eingeschoben wurde;
ein Geldschein-Lagerungsmittel (32), das dazu eingerichtet ist, den Geldschein zu lagern, der durch das Geldschein-Validierungsmittel als valid bestimmt wurde;
ein Lese-/Schreibmittel (55), das dazu eingerichtet ist, Kreditinformation von und auf eine Informationaufzeichnungs-Karte zu lesen und zu schreiben, die in den Karten-Einschubsschacht eingeschoben wurde;
ein Karten-Lagerungsmittel (60), das dazu eingerichtet ist, die Information aufzeichnenden Karten zu lagern;
ein Steuerungsmittel (47), das dazu eingerichtet ist, das Geldschein-Validierungsmittel und das Lese-/Schreibmittel zu steuern, und Kartenverarbeitung durchzuführen als Reaktion auf den Typ einer Informationsaufzeichnungs-Karte, die in den Karteneinschubsschacht eingeschoben wurde, wenn der Spieler damit aufhört, das Spiel zu spielen; und
ein Kartentransportmittel (36a), das dazu eingerichtet ist, die Informationaufzeichnungs-Karten (c) im Hinblick auf das Lese-/Schreibmittel (55) zu transportieren, und das dazu eingerichtet ist, durch das Steuermittel (47) gesteuert zu werden, wobei
die Vielzahl von Typen von Information aufzeichnenden Karten (c) beinhalten:
eine spezifische Karte (c), auf der eine eindeutige Information zur Identifizierung eines Besitzers der spezifischen Karte aufgezeichnet ist; und
eine temporäre Speicherkarte, auf der keine Information zur Identifizierung eines Besitzers der temporären Speicherkarte aufgezeichnet ist, und
wobei das Geldschein-/Bearbeitungsmittel dazu eingerichtet ist, in der Lage zu sein, eine temporäre Speicherkarte auszugeben, die mit Kreditinformationen aufgezeichnet ist, und **dadurch gekennzeichnet ist, dass**
das Steuermittel dazu eingerichtet ist, das Kartentransportmittel zu steuern, so dass die temporäre Speicherkarte zu dem Kartenlagerungsmittel (60) zum Lagern der temporären Speicherkarte darin transportiert wird, wenn die Kreditinformation auf der temporären Speicherkarte (c) Null ist.

2. Spielgerät (1) nach Anspruch 1, weiterhin umfassend ein Gehäuse (10).

3. Spielgerät (1) nach Anspruch 1, weiterhin umfassend ein Gehäuse (10); und
eine externe Einheit (10a), die an dem Gehäuse angebracht ist und die dazu eingerichtet ist, das Geldschein-/Kartenbearbeitungsmittel (30) aufzunehmen.

4. Spielgerät (1) nach Anspruch 3, wobei die externe Einheit (10a) dazu eingerichtet ist, von dem Gehäuse (10) abnehmbar zu sein.

5. Spielgerät nach Anspruch 1, wobei das Steuermittel (47) dazu eingerichtet ist, das Lese-/Schreibmittel (55) zu steuern, die Kreditinformationen auf der spezifischen Karte beim Zurückgeben der spezifischen Karte an den Spieler zu aktualisieren in einem Fall, wenn die spezifische Karte (c) in den Karteneinschubsschacht (36) eingegeben wird, wenn der Spieler aufhört, das Spiel zu spielen.

6. Spielgerät (1) nach Anspruch 1, wobei das Steuermittel (47) weiterhin dazu eingerichtet ist, das Lese-/Schreibmittel (55) zu steuern, um die Kreditinformation auf der temporären Speicherkarte beim Zurückgeben der temporären Speicherkarte an den Spieler zu aktualisieren in einem Fall, wenn die temporäre Speicherkarte (c) in den Karteneinschubsschacht (36) eingegeben wird, wenn der Spieler aufhört, das Spiel zu spielen.

7. Spielgerät (1) nach Anspruch 1, wobei das Steuermittel (47) weiter dazu eingerichtet ist, den Kartentransportmechanismus zu steuern, eine in dem Lagerungsmittel (60) gelagerte temporären Speicherkarte herauszunehmen, so dass die temporäre Speicherkarte an den Spieler ausgegeben wird, und das Lese-/Schreibmittel zu kontrollieren, die Kreditinformation auf der temporären Speicherkarte zu schreiben, in einem Fall, wenn eine Informationaufzeichnungs-Karte nicht in den Karteneinschubsschacht (36) eingeschoben wird, und die Kreditinformation nicht Null ist, wenn der Spieler aufhört, das Spiel zu spielen.

8. Spielgerät (1) nach Anspruch 1, weiterhin umfassend einen Hauptgehäuseabschnitt (31), ausgestattet mit einem mittleren Akzeptanzabschnitt (34), der ausgestattet ist mit einem Geldschein-Einschubsschacht (35) und einem Karteneinschubsschacht (36) an wesentlich der gleichen Position.

9. Spielgerät (1) nach Anspruch 1, wobei der Karteneinschubsschacht (36) enger als der Geldschein-Einschubsschacht (35) ist.

10. Spielgerät (1) nach Anspruch 1, wobei das Geldschein-validierungsmittel (36) mit einem Geldschein-Einschubssensor (43) ausgestattet ist, der dazu eingerichtet ist, einen Einschub des Geldscheins an der Position zu erfassen, wo der Geldschein transportiert ist, wobei die Position außerhalb eines Areals ist, wo die Karte transportiert wird.

11. Spielsystem (300), umfassend:
eine spezifische Karten-Ausgabevorrichtung (320), die dazu eingerichtet ist, eine spezifische Karte (c), auf der eine eindeutige Information zur Identifizierung eines Besitzers der spezifischen Karte und Kreditinformation gespeichert sind;
eine Vielzahl von Spielgeräten (1) nach Anspruch 1;
eine Justierungsvorrichtung (330), die dazu eingerichtet ist, separate Justierungsverarbeitung für die auf der spezifischen Karte aufgezeichnete Kreditinformation durchzuführen und für die Kreditinformation auf der temporären Speicherkarte; und
einen Verwaltungsserver (310), der dazu eingerichtet ist, Daten von und zu der der spezifischen Karten-Ausgabevorrichtung, den Spielgeräten und der Justierungsvorrichtung zu senden und zu empfangen, und Verwaltungsdatenbanken (313 bis 315) beinhaltet, die dazu eingerichtet sind, die Kreditinformation und die eindeutige Information, die auf der von der spezifischen Kartenausgabevorrichtung ausgegebenen spezifischen Karte aufgezeichnet ist, Kreditinformation, die in jedem der Spielgeräte auftritt, und Justierungsinformation, die durch die Justierungsvorrichtung bereitgestellt wird, zu verwalten.

## Revendications

1. Machine de jeu (1) pour fournir un jeu à un joueur, la machine de jeu comprenant un moyen de traitement de billet de banque / carte (30) comprenant :
une fente d'insertion de billet de banque (35) agencée pour permettre à un billet de banque d'être inséré ;
une fente d'insertion de carte (36) agencée pour permettre à une pluralité de types de cartes d'enregistrement d'informations d'être insérés ;
un moyen de validation de billet de banque (37) agencé pour déterminer une validité d'un billet de banque inséré dans la fente d'insertion de billet de banque ;
un moyen de stockage de billet de banque (32) agencé pour stocker le billet de banque qui est déterminé comme étant valide par le moyen de validation de billet de banque ;
un moyen de lecture / écriture (55) agencé pour lire et écrire des informations de crédit à partir de et à destination d'une carte d'enregistrement d'informations qui est insérée dans la fente d'insertion de carte ;
un moyen de stockage de carte (60) agencé pour stocker les cartes d'enregistrement d'informations ;
un moyen de commande (47) agencé pour commander le moyen de validation de billet de banque et le moyen de lecture / écriture, et pour effectuer un traitement de carte en réponse au type de carte d'enregistrement d'informations inséré dans la fente d'insertion de carte lorsque le joueur arrête de jouer au jeu ; et
un moyen de transport de carte (36a) agencé pour transporter les cartes d'enregistrement d'informations (c) par rapport au moyen de lecture / écriture (55), et qui est agencé pour être commandé par le moyen de commande (47), dans lequel
la pluralité de types des cartes d'enregistrement d'informations (c) inclut :
une carte spécifique (c) dans laquelle des informations uniques pour identifier un propriétaire de la carte spécifique sont enregistrées ; et
une carte de stockage provisoire dans laquelle aucune information pour identifier un propriétaire de la carte de stockage provisoire n'est enregistrée, et
le moyen de traitement de billet de banque / carte est agencé pour être susceptible de délivrer une carte de stockage provisoire enregistrée avec les informations de crédit, et **caractérisée en ce que**,
le moyen de commande est agencé pour commander le moyen de transport de carte pour transporter la carte de stockage provisoire vers le moyen de stockage de carte (60) pour stocker la carte de stockage provisoire en son sein quand les informations de crédit sur la carte de stockage provisoire (c) sont à zéro.

2. Machine de jeu (1) selon la revendication 1, comprenant en outre une armoire (10).

3. Machine de jeu (1) selon la revendication 1, comprenant en outre :
une armoire (10) ; et
une unité externe (10a) qui est attachée à l'armoire et qui est agencée pour loger le moyen de traitement de billet de banque / carte (30).

4. Machine de jeu (1) selon la revendication 3, dans laquelle l'unité externe (10a) est agencée pour pouvoir être détachée de l'armoire (10).

5. Machine de jeu (1) selon la revendication 1, dans laquelle le moyen de commande (47) est agencé pour commander le moyen de lecture / écriture (55) pour mettre à jour les informations de crédit sur la carte spécifique en renvoyant la carte spécifique au joueur dans un cas où la carte spécifique (c) est entrée dans la fente d'insertion de carte (36) lorsque le joueur arrête de jouer au jeu.

6. Machine de jeu (1) selon la revendication 1, dans laquelle le moyen de commande (47) est en outre agencé pour commander le moyen de lecture / écriture (55) pour mettre à jour les informations de crédit sur la carte de stockage provisoire en renvoyant la carte de stockage provisoire au joueur, dans un cas où la carte de stockage provisoire (c) est entrée dans la fente d'insertion de carte (36) lorsque le joueur arrête de jouer au jeu.

7. Machine de jeu (1) selon la revendication 1, dans laquelle le moyen de commande (47) est en outre agencé pour commander le mécanisme de transport de carte pour enlever une de la carte de stockage provisoire stockée dans le moyen de stockage (60) de sorte que la carte de stockage provisoire est délivrée au joueur, et pour commander le moyen de lecture / écriture (55) pour écrire les informations de crédit sur la carte de stockage provisoire, dans un cas où une carte d'enregistrement d'informations n'est pas insérée dans la fente d'insertion de carte (36) et où les informations de crédit ne sont pas à zéro lorsque le joueur arrête de jouer au jeu.

8. Machine de jeu (1) selon la revendication 1, comprenant en outre une section de corps principal (31) formée avec une section d'acceptation de support (34) qui est formée avec une fente d'insertion de billet de banque (35) et une fente d'insertion de carte (36) sensiblement à la même position.

9. Machine de jeu (1) selon la revendication 1, dans laquelle la fente d'insertion de carte (36) est plus étroite que la fente d'insertion de billet de banque (35).

10. Machine de jeu (1) selon la revendication 1, dans laquelle le moyen de validation de billet de banque (37) est un capteur d'insertion de billet de banque (43) conçu pour détecter l'insertion du billet de banque à une position où le billet de banque est transporté, la position étant à l'extérieur d'une zone où la carte est transportée.

11. Système de jeu (300) comprenant :
un appareil de délivrance de carte spécifique (320) agencé pour délivrer une carte spécifique (c) dans laquelle des informations de crédit et des informations uniques pour identifier un propriétaire de la carte spécifique sont enregistrées ;
une pluralité de machines de jeu (1) selon la revendication 1 ;
un appareil d'ajustement (330) agencé pour effectuer un traitement d'ajustement distinct pour les informations de crédit enregistrées sur la carte spécifique et pour les informations de crédit sur la carte de stockage provisoire ; et.
un serveur de gestion (310) agencé pour émettre et recevoir des données vers et en provenance de l'appareil de délivrance de carte spécifique, des machines de jeu et de l'appareil d'ajustement, et qui inclut des bases de données de gestion (313 à 315) agencées pour gérer les informations de crédit et les informations uniques enregistrées sur la carte spécifique délivrée par l'appareil de délivrance de carte spécifique, des informations de crédit se produisant dans chacune des machines de jeu, et des informations d'ajustement fournies par l'appareil d'ajustement.
